**Europäisches Patentamt**

**European Patent Office**

**Office européen des brevets**

(11) Veröffentlichungsnummer: **0 178 405**
**B1**

# (12) EUROPÄISCHE PATENTSCHRIFT

(45) Veröffentlichungstag der Patentschrift:
**01.06.88**

(21) Anmeldenummer: **85109751.9**

(22) Anmeldetag: **02.08.85**

(51) Int. Cl.⁴: **F 16 B  13/04**

(54) **Dübel aus Kunststoff insbesondere für Befestigungen an mit Fliesen versehenen Gipskartonwänden von Nassräumen.**

(30) Priorität: **10.10.84  DE 3437186**

(43) Veröffentlichungstag der Anmeldung:
**23.04.86 Patentblatt 86/17**

(45) Bekanntmachung des Hinweises auf die Patenterteilung:
**01.06.88 Patentblatt 88/22**

(84) Benannte Vertragsstaaten:
**AT BE CH FR GB IT LI NL**

(56) Entgegenhaltungen:
**DE - B - 2 108 264**
**GB - A - 1 155 140**

(73) Patentinhaber: **fischerwerke Artur Fischer GmbH & Co.
KG, Weinhalde 14-18,
D-7244 Tumlingen/Waldachtal 3 (DE)**

(72) Erfinder: **Stromiedel, Konrad,
Friedrich-Schneck-Strasse 9,
D-7244 Waldachtal 3/Tumlingen (DE)**

ACTORUM AG

**Beschreibung**

Die Erfindung betrifft einen Dübel aus Kunststoff zur Befestigung in einem Bohrloch an einer mit Fliesen versehenen Gipskartonwand oder dgl. mit einem, nach dem Einschieben in das Bohrloch an der Wandaussenfläche zur Anlage kommenden Stirnflansch, einem sich daran anschliessenden Hals und einem mittels einer Befestigungsschraube verankerbaren Spritzteil.

Für diesen Einsatzbereich werden üblicherweise dieselben Dübel verwendet, die auch für Trockenräume vorgesehen sind. Damit werden zwar die Anforderungen bezüglich der Befestigung erfüllt, Probleme entstehen jedoch aufgrund des durch die Fliesenfugen eindringenden Wassers, das an der Frontseite der Gipskartonwand durch das Mörtelbett abläuft und im Bereich der Befestigungsstellen durch den Ringspalt zwischen Dübelaussenfläche und Bohrlochwandung in die Gipswand eindringt. Durch die ständige Befeuchtung dieser Stellen wird der Ankergrund und damit die Befestigung zerstört.

Der Erfindung liegt daher die Aufgabe zugrunde, einen Dübel für den Einsatz in Nassräumen zu schaffen, mit dem das Eindringen von Wasser in die Gipswand verhindert wird.

Erfindungsgemäss wird diese Aufgabe bei einem Dübel der eingangs genannten Gattung dadurch erreicht, dass der Hals des Dübels mit einer am Aussenumfang umlaufenden Nut versehen ist, deren Breite so bemessen ist, dass nach dem Einschieben des Dübels in das Bohrloch die Frontseite der Gipskartonwand im Bereich der Nut liegt, wobei eine Dichtmasse durch eine in dem Stirnflansch des Dübels angeordnete Einspritzöffnung und eine in die umlaufende Nut mündende Längsrille einspritzbar ist.

Aus der DE-B-2 108 264 ist zwar ein Ankerbolzen für einen Betonanker bekannt, der eine Einspritzöffnung besitzt, durch die jedoch Zement zur Festlegung des Dübels im Bohrloch eingespritzt wird. Dieser bekannte Ankerbolzen ist für den Einsatz in Gipskartonwänden oder dgl. und insbesondere zur Lösung der erfindungsgemässen Aufgabe nicht geeignet, da die Verwendung einer wasserabweisenden Dichtmasse nicht möglich ist.

Die erfindungsgemässe Lösung geht von einem für Gipskartonwände besonders geeigneten Kunststoffdübel aus, der mit einem entsprechenden Halsteil die Dicke der Fliese und des Mörtelbettes überbrückt. Die am Dübelhals angeordnete umlaufende Nut weist zum Stirnflansch einen Abstand auf, der sicherstellt, dass nach dem Einschieben des Dübels in das Bohrloch die umlaufende Nut an der abzudichtenden Stelle zu liegen kommt. Die Breite der Nut ist so bemessen, dass die Toleranzen in der Fliesen- und Mörtelbettdicke ausgeglichen werden. Zum Abdichten des Dübelloches wird dann durch die Einspritzöffnung des Stirnflansches eine tuben- bzw. folienverpackte Dichtmasse, bspw. Silikon, über die Längsrille in die umlaufende Nut eingepresst. Die Dichtmasse schliesst vollständig den Ringspalt und die Hohlräume zwischen der Dübelmantelfläche und der Bohrlochwandung. Damit ist ein Eindringen des an der Frontseite der Gipskartonplatte ablaufenden Wassers in die Aufnahmebohrung des Dübels, und somit eine Zerstörung der Gipswand nicht mehr möglich.

In einer weiteren Ausgestaltung kann die vom Stirnflansch weiter abliegende Begrenzungswand der umlaufenden Nut durch eine Dichtlippe über den Aussendurchmesser des Bohrloches hinaus radial erweitert sein. Beim Bohren in Gipskartonwänden fallen die Bohrlöcher in der Regel grösser aus als in anderen Wandbaustoffen. Mit dem Dichtflansch wird der dadurch entstehende grössere Ringspalt soweit geschlossen, dass die Abdichtung auf den Nutbereich begrenzt wird. Die Dichtlippe ermöglicht auch einen höheren Einspritzdruck, wodurch eine bessere Verfüllung der Ringnut sowie der Baustoffporen erreicht wird.

In weiterer Ergänzung der Erfindung kann die Längsrille sich zur umlaufenden Nut hin erweitern. Mit dieser Massnahme wird beim Einspritzen eine bessere Umlenkung der Dichtmasse in die umlaufende Nut erreicht.

In der Zeichnung ist ein Ausführungsbeispiel der Erfindung dargestellt.

Es zeigen:

Figur 1 den in der Aufnahmebohrung eingesetzten Dübel

Figur 2 den Dübel nach durchgeführter Montage.

Der Dübel 1 besteht aus dem Schaft 2, der eine Längsbohrung 3 mit Innenrippen 4 aufweist, und den beiden vom Schaft 2 ausgehenden Schenkel 5, die durch den Hals 6 des Dübels zusammengehalten sind. An der Stirnseite des Halses 6 ist als Durchschiebsicherung und zur Aussenabdichtung des Bohrloches 7 ein rechtwinklig abstehender Stirnflansch 8 angeordnet. Der Hals des Dübels 1 ist mit einer umlaufenden Nut 9 versehen, deren Abstand vom Stirnflansch 8 so gelegt ist, dass nach dem Einschieben des Dübels in das Bohrloch 7 und Anlage des Stirnflansches 8 an der Aussenfläche der Fliese 10 die Frontseite der Gipskartonwand 11 beidseitig von der Nut 9 überlappt wird. Die Breite der Nut 9 ist so gewählt, dass diese Überlappung auch bei unterschiedlicher Dicke der Fliesen 10 und des Mörtelbettes 12 gewährleistet ist. Die den Aussendurchmesser des Dübels radial überragende Dichtlippe 13 ist an der vom Stirnflansch 8 weiter abliegenden Begrenzungswand der umlaufenden Nut 9 angeordnet. Damit wird auch bei grösser ausfallenden Bohrlöchern ein Verschluss des Ringspaltes zwischen der Dübelmantelfläche und der Bohrlochwandung erreicht. Das Ausfüllen der umlaufenden Nut 9 erfolgt mittels einer im dargestellten Ausführungsbeispiel in einer Folientasche 14 mit Düsenansatz 15 verpackten Dichtmasse 16. Nach dem Abschneiden des Düsenverschlussen wird die Dichtmasse 16 durch die Einspritzöffnung 17 im Stirnflansch 8 des Dübels 1 und dem durch die Längsrille 18 gebildeten Spritzkanal in die umlaufende Nut 9 eingespritzt. Durch die Erweiterung der Längsrille 18 zur umlaufenden Nut hin wird die Umlenkung der Dichtmasse 16 beim Einspritzen in die Nut 9 erleichtert. Im Bereich der Frontseite der Gipskartonwand 11 entsteht somit eine Abdichtung, die das Eindringen von Wasser in die Aufnahmebohrung 7 des Dübels verhindert.

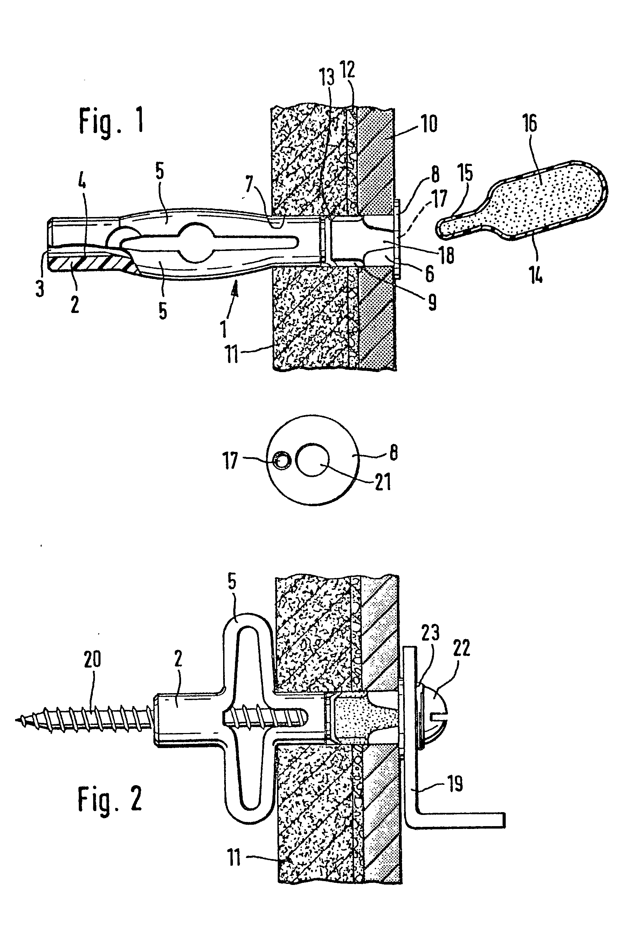

Nach der Abdichtung wird zur Befestigung eines Gegenstandes 19 gemäss Figur 2 die Befestigungsschraube 20 in die Längsbohrung 3 des Schaftes 2 eingedreht. Dabei knicken die Schenkel 5 an der Knickstelle radial aus und falten sich axial zusammen. Es entsteht somit an der Rückseite der Gipskartonwand 11 ein grossflächiges Gegenlager, das in Verbindung mit Gipskartonplatten hohe Haltewerte erlaubt. Zur Abdichtung des Schraubenkanals 21 im Dübel 1 ist es zweckmässig, unter den Schraubenkopf 22 zusätzlich eine Gummischreibe 23 zu verspannen.

### Patentansprüche

1. Dübel aus Kunststoff zur Befestigung in einem Bohrloch (7) an einer mit Fliesen versehenen Gipskartonwand (11) oder dgl. mit einem, nach dem Einschieben in das Bohrloch an der Wandaussenfläche zur Anlage kommenden Stirnflansch, einem sich daran anschliessenden Hals und einem mittels einer Befestigungsschraube verankerbaren Spritzteil, dadurch gekennzeichnet, dass der Hals (6) des Dübels (1) mit einer am Aussenumfang umlaufenden Nut (9) versehen ist, deren Breite so bemessen ist, dass nach dem Einschieben des Dübels in das Bohrloch (7) die Frontseite der Gipskartonwand (11) im Bereich der Nut (9) liegt, wobei eine Dichtmasse (16) durch eine in dem Stirnflansch (8) des Dübels (1) angeordnete Einspritzöffnung (17) und eine in die umlaufende Nut (9) mündende Längsrille (18) einspritzbar ist.

2. Dübel nach Anspruch 1, dadurch gekennzeichnet, dass die vom Stirnflansch (8) weiter abliegende Begrenzungswand der umlaufenden Nut (9) durch eine Dichtlippe (13) über den Aussendurchmesser des Dübels (1) hinaus radial erweitert ist.

3. Dübel nach Anspruch 1, dadurch gekennzeichnet, dass die Längsrille (18) zur umlaufenden Nut (9) hin erweitert ist.

### Claims

1. Plug of plastics material for fastening in a hole (7) drilled in a plaster board wall (11) or similar wall covered with tiles, with an end flange coming to bear against the outer face of the wall after insertion of the plug in the drilled hole, a neck portion adjoining this end flange and an injection part anchorable by means of a fixing screw, characterized in that the neck portion (6) of the plug (1) is provided with a groove (9) running around its outer circumference, the width of which groove is so dimensioned that after the plug has been inserted into the drilled hole (7) the front side of the plaster board wall (11) lies in the region of the groove (9), wherein a sealing compound (16) is injectable through an injection opening (17) arranged in the end flange (8) of the plug (1) and through a longitudinal channel (18) opening into the circumferential groove (9).

2. Plug according to claim 1, characterized in that the bounding wall of the circumferential groove (9) lying further away from the end flange (8) is widened radially beyond the external diameter of the plug (1) by a sealing lip (13).

3. Plug according to claim 1, characterized in that the longitudinal channel (18) is winened towards the circumferential groove (9).

### Revendications

1. Cheville en matière plastique pour la fixation dans un trou de perçage (7) pratiqué dans une paroi (11) de carton-plâtre couverte de carrelages ou dans un matériau similaire, la cheville comportant une collerette frontale venant s'appuyer sur la surface extérieure de la paroi après enfilage de la cheville dans le trou de perçage, un col qui y fait suite et une partie injectée pouvant être ancrée au moyen d'une vis de fixation, cheville caractérisée en ce que le col (6) de la cheville (1) est muni, sur son contour extérieur, d'une gorge (9) annulaire, dont la largeur a une dimension telle, qu'après enfilage de la cheville dans le trou (7) de perçage, la face avant de la paroi (11) de carton-plâtre se trouve dans la zone de la gorge (9), une composition (16) d'étanchement pouvant être injectée par une ouverture (17) d'injection, ménagée dans la collerette frontale (8) de la cheville (1), et dans une rainure longitudinale (18) débouchant dans la gorge (9) annulaire.

2. Cheville selon la revendication 1, caractérisée en ce que la paroi de limitation de la gorge (9) annulaire située le plus loin de la collerette frontale (8) se prolonge par une lèvre (13) d'étanchéité, en saillie radiale au-delà du diamètre extérieur de la cheville (1).

3. Cheville selon la revendication 1, caractérisée en ce que la rainure longitudinale (18) s'élargit jusqu'à la gorge (9) annulaire.

Fig. 1

Fig. 2